# EUROPÄISCHE PATENTSCHRIFT

(11) **EP 4 067 723 B1**
(45) Veröffentlichungstag und Bekanntmachung des Hinweises auf die Patenterteilung: **06.05.2026**
(21) Anmeldenummer: 22159548.1
(22) Anmeldetag: 01.03.2022
(51) Int. Cl.: F16P 1/02, F16P 3/00, F16P 3/12

(54) **VORRICHTUNG UND VERFAHREN ZUR SICHERUNG EINER EINZUGSSTELLE**
DEVICE AND METHOD FOR SEALING AN INTAKE POINT
DISPOSITIF ET PROCÉDÉ DE SÉCURISATION D'UN POINT DE PROTECTION DES ZONES DE COINCEMENT

(30) Priorität: 03.03.2021 DE 102021105144
(43) Veröffentlichungstag der Anmeldung: 05.10.2022
(73) Patentinhaber: Wilhelm Bahmüller Maschinenbau-Präzisionswerkzeuge GmbH, 73655 Plüderhausen (DE)
(72) Erfinder: Fabig, Lars, 71573 Allmersbach im Tal (DE)
(74) Vertreter: DREISS Patentanwälte PartG mbB

(56) Entgegenhaltungen:
- DE-C1- 19 835 033
- US-A- 4 085 303
- US-A1- 2014 239 573

## Beschreibung

Die Erfindung betrifft eine Sicherungsvorrichtung für eine Einzugstelle, wie sie in vielen Maschinen und Anlagen vorhanden sind. Typische Beispiele für eine Einzugstelle sind zwei Walzen oder zwei Flachriemen, zwischen denen ein Werkstück transportiert wird. Typischer Vertreter solcher Werkstücke sind Wellpappe, eine Platte aus Holz, ein Metallblech oder ein Profilstab.

Bei Einzugstellen besteht die Gefahr, dass die Hand eines Maschinenbedieners in den sich verengenden Spalt zwischen der Walze bzw. dem Flachriemen und dem Werkstück gerät und in die Einzugstelle gezogen wird. Dabei kann es zu schweren Verletzungen, insbesondere der Hand des Maschinenbedieners, kommen.

Die Erfindung wird nachfolgend im Zusammenhang mit einer Anlage zur Verarbeitung von Wellpappe erläutert. Dabei wird die Wellpappe zwischen zwei Flachriemen transportiert. Die Flachriemen werden über mehrere zylindrische Rollen geführt und transportieren eine Wellpappe durch die Anlage. Dabei entsteht zwangsläufige eine Einzugstelle.

Die einschlägigen Normen, wie beispielsweise die DIN EN 1010-1:2011-06, schreiben für die Sicherung von Einzugstellen feste trennende Schutzeinrichtungen vor, die sich über die gesamte Arbeitsbreite der Zylinder oder Walzen erstrecken. Eine solche feste trennende Schutzeinrichtung kann beispielsweise ein Flacheisen oder ein Winkeleisen sein, das in einem geringen Abstand (von maximal 6 mm) zu dem Werkstück montiert ist, das in die Einzugstelle gezogen wird. Dabei muss die feste trennende Schutzeinrichtung so angebracht sein, dass ein Normalenvektor der Fläche, auf welche die Hand auftrifft, im Wesentlichen parallel zu der Bewegungsrichtung des Werkstücks in der Einzugstelle erfolgt (siehe Bild 3 aus Kapitel 5.2.1.2 der DIN EN 1010-1:2011-06).

Feste trennende Schutzeinrichtungen sind sehr wirksam, da sie zuverlässig verhindern, dass ein Finger oder die gesamte Hand des Maschinenbedieners in die Einzugstelle eingezogen wird. Allerdings haben die festen trennenden Schutzeinrichtungen Nachteile bei der Arbeit an der Maschine bzw. der Anlage. Zum Beispiel erschwert der von der DIN vorgegebene enge Spalt das Einführen von Werkstücken (Wellpappe, Holzplatte oder Blech oder dergleichen). Darüber hinaus können auch trennende Schutzeinrichtungen mit einem Abstand zur Gefahrenstelle oder berührungslos wirkende Schutzeinrichtungen (Lichtgitter, Lichtschranke) verwendet werden. Dann muss die gefahrbringende Bewegung schneller stillgesetzt werden als ein Mensch sie erreichen kann (DIN EN ISO 13855).

Aus der US 4, 085, 303 ist eine Sicherungsvorrichtung für eine Einzugstelle einer Heißmangel bekannt, die zwei hintereinander angeordnete und nacheinander ansprechende Not-Halt-Taster umfasst. Die Sicherungsvorrichtung umfasst eine Andruckwalze, die im Normalbetrieb z. B. ein Bettlaken glättet, welches in die Heißmangel eingezogen wird. Die Andruckwalze, ist an Schwenkarmen gelagert und wird mit einer vorbestimmten Kraft gegen das Bettlaken gedrückt. Wenn anstelle des Bettlakens die Hand des Bedieners unter die Andruckwalze gerät, dann bewegt sich erstere nach oben und in Folge dessen wird ein erster Not-Halt-Taster geöffnet und dadurch die Stromversorgung eines Antriebs unterbrochen. In Transportrichtung hinter der Andruckwalze ist eine weitere bewegliche Trenneinrichtung angeordnet, die ähnlich wie die erste bewegliche Trenneinrichtung (Andruckwalze) arbeitet.

Der Erfindung liegt die Aufgabe zugrunde, eine verbesserte Sicherungsvorrichtung bereitzustellen, die einerseits ohne Abstriche bei der Arbeitssicherheit eine verbesserte Bedienbarkeit der Maschine bzw. der Anlage gewährleistet und darüber hinaus die Arbeitssicherheit weiter erhöht.

Diese Aufgabe wird erfindungsgemäß durch durch eine Vorrichtung nach Anspruch 1 gelöst. Die erfindungsgemäße Vorichtung weist zusätzlich zu der festen trennenden Schutzeinrichtung eine bewegliche Schutzeinrichtung vorgesehen ist, die eine Ausweichbewegung ausführen kann, wenn beispielsweise die Hand eines Maschinenbedieners in die bewegliche Schutzeinrichtung gezogen wird.

Die Ausweichbewegung der beweglichen Schutzeinrichtung verläuft orthogonal zu der Einzugsrichtung der Einzugstelle. In jedem Fall hat die Ausweichbewegung eine Richtungskomponente, die orthogonal zu der Einzugsrichtung der Einzugstelle gerichtet ist. Anders ausgedrückt: Wenn, um im Beispiel zu bleiben, die Hand eines Maschinenbedieners in die bewegliche Schutzeinrichtung gezogen wird, dann weicht die bewegliche Schutzeinrichtung seitlich oder nach oben aus, so dass die Hand nur kurzfristig "eingeklemmt" wird. Die auf die Hand wirkenden Kräfte sind überdies begrenzt, so dass keine oder höchstens reversible Verletzungen der Hand auftreten.

Besonders vorteilhaft an der erfindungsgemäßen beweglichen Schutzeinrichtung ist, dass sie den natürlichen Reflex jedes Maschinenbedieners unterstützt, die Hand sofort wieder aus der Einzugstelle zu ziehen, sobald sie zwischen die bewegliche Schutzeinrichtung und das in die Einzugstelle geförderte Produkt (z. B. Wellpappe) gezogen wird. Dieser Reflex ist sehr wirksam und verhindert in den meisten Fällen zusammen mit der Ausweichbewegung der beweglichen Schutzeinrichtung eine Verletzung der Hand des Maschinenbedieners und eine Unterbrechung des Produktionsprozesses. Dadurch werden die Arbeitssicherheit verbessert und gleichzeitig die Stillstandzeiten reduziert.

Wenn der Reflex des Maschinenbedieners, die Hand aus der Einzugstelle herauszuziehen, nicht schnell oder nicht kraftvoll genug erfolgt, wird die Hand zwischen der beweglichen Schutzeinrichtung, die seitlich oder nach oben ausgewichen ist, und dem Werkstück in Richtung der Einzugstelle gezogen, allerdings nur bis die Fingerspitzen der Hand die feste trennende Schutzeinrichtung erreicht. Die feste trennende Schutzeinrichtung stoppt die Hand und verhindert ein weiteres Einziehen der Hand in die Einzugstelle.

Durch diese erfindungsgemäße zweistufige Sicherungsvorrichtung werden die Wirksamkeit der Sicherungsvorrichtung erhöht und gleichzeitig die Stillstandszeiten aufgrund von unfallträchtigen Situationen reduziert.

Es versteht sich von selbst, dass die bewegliche Schutzeinrichtung in Einzugsrichtung gesehen vor der festen trennenden Schutzeinrichtung angeordnet ist.

In vorteilhafter Ausgestaltung der Erfindung sind die bewegliche Schutzeinrichtung und/oder die feste trennende Schutzeinrichtung an einem gemeinsamen Träger angeordnet. Das ermöglicht es, die Vorrichtung mit Hilfe eines Maschinenbedieners an die Verarbeitung verschieden dicker Produkte einzustellen. Produkte können z.B. Wellpappen sein, die einlagig, zweilagig oder dreilagig sein können. Dementsprechend ist die Dicke der Wellpappe verschieden. Durch solche Einzugstellen können aber auch plattenförmige Werkstoffe, wie Tischlerplatten oder andere Produkte eingezogen und gefördert werden. Fast immer wenn ein anderes Produkt gefördert wird, muss die Schutzvorrichtung neu eingestellt werden. Wenn die bewegliche Schutzeinrichtung und die feste trennende Schutzeinrichtung an dem Träger angeordnet sind, dann kann der Maschinenbediener beim Wechsel eines Produkts den Träger dementsprechend etwas anheben und dort montieren oder in einer etwas abgesenkten Position positionieren. Er hat dann die Gewähr, dass beide Schutzeinrichtungen richtig und in einer geeigneten Relation zueinander positioniert sind, um ihre Funktionen optimal zu erfüllen.

In weiterer vorteilhafter Ausgestaltung der Erfindung ist vorgesehen, dass die bewegliche Schutzeinrichtung entgegen der Richtung der Ausweichbewegung mit einer definierten Vorspann- oder Haltekraft in einer Normalposition gehalten wird. Das hat den Vorteil, dass die bewegliche Schutzeinrichtung erst auslöst, wenn diese definierte Haltekraft überschritten wird. Alle während des Betriebs auf die bewegliche Schutzeinrichtung einwirkenden Kräfte, die kleiner sind als die definierte Haltekraft, lösen keine Ausweichbewegung aus. Dies bedeutet, dass die bewegliche Schutzeinrichtung bei diesen kleineren Kräften als Einführschräge dienen kann. Erst wenn die Kräfte so groß werden, dass die Haltekraft überschritten wird, verlässt die bewegliche Schutzeinrichtung die Normalposition, schützt dadurch die Hand des Maschinenbedieners vor schweren Verletzungen und löst ggf. einen Nothalt der Einzugstelle aus.

Die Haltekraft der beweglichen Schutzeinrichtung ist in vorteilhafter Weiterbildung einstellbar, so dass die Haltekraft immer nur so groß wie unbedingt nötig ist. Wenn beispielsweise leichte und kleine Wellpappe in die Einzugstelle gefördert werden soll, dann ist eine kleine Haltekraft ausreichend. Bei großen und dreilagigen Wellpappen sind die beim Einführen in die Einzugstelle auftretenden Kräfte naturgemäß größer. Daher ist eine höhere Haltekraft wünschenswert.

Damit kann den besonderen Bedingungen an der jeweiligen Einzugstelle Rechnung getragen werden. Beispielsweise kann die Haltekraft reduziert werden, wenn die einzuziehenden Werkstücke leicht und gut handhabbar sind. Wenn jedoch die einzuziehenden Werkstücke (große mehrlagige Wellpappenbögen, schwere Holzplatten oder Bleche) größere Kräfte beim Einführen in die Einzugstelle erfordern, kann die Vorspannkraft erhöht werden. Dann ist ein gutes Arbeiten mit der Maschine im Bereich der Einzugstelle nach wie vor möglich.

Selbstverständlich muss die Haltekraft so beschränkt sein, dass sie nicht zu bleibenden Verletzungen der Hand eines Maschinenbedieners führt, wenn diese unbeabsichtigterweise zwischen das Produkt (die Wellpappe) und die bewegliche Schutzeinrichtung gelangt.

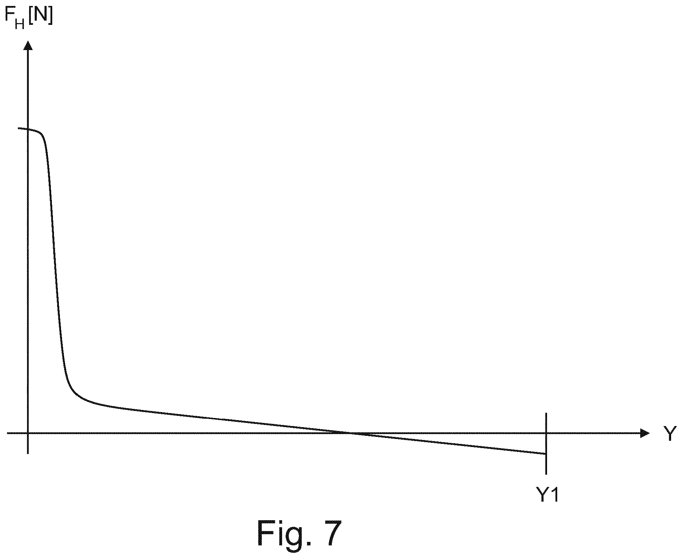

In weiterer vorteilhafter Ausgestaltung der Erfindung ist die Haltekraft der beweglichen Schutzeinrichtung positionsabhängig. Sie ist maximal, wenn sich die Schutzeinrichtung in der Normalposition befindet und sie hat ein Minimum, wenn die bewegliche Schutzeinrichtung sich in der Ausweichposition befindet. In der Ausweichposition kann die Haltekraft sogar negativ sein. Dies bedeutet, dass die bewegliche Schutzeinrichtung aktiv von der Normalposition wegbewegt wird, sobald sie diese Normalposition einmal verlassen hat. Zur Erläuterung dieses Sachverhalts sei auf die Figur 7 verwiesen.

Um das Einführen eines Produkts zu erleichtern, weist die bewegliche Schutzeinrichtung an einem vorderen Ende eine Einführschräge auf. Das vordere Ende ist das Ende, welches der festen trennenden Schutzeinrichtung gegenüberliegt. Durch die Einführschräge wird die Bedienung der Maschine bzw. der Anlage weiter vereinfacht. Naturgemäß führt die Einführschräge dazu, dass auch die Hand eines Maschinenbedieners durch diese Einführschräge in Richtung der Einzugstelle gezogen wird. Allerdings wird in vielen Fällen auch gerade wegen der Einführschräge das Zurückziehen der Hand durch den Maschinenbediener ermöglicht.

Die bewegliche Schutzeinrichtung kann auch als drehbar gelagerte Rolle ausgebildet sein bzw. eine drehbar gelagerte Rolle umfassen. Dann ist gewissermaßen der Radius der Rolle am vorderen Ende die Einführschräge, wenn auch eine gekrümmte Einführschräge.

Unabhängig von der Bauart der beweglichen Schutzeinrichtung ist diese relativ zu der festen trennenden Schutzeinrichtung bewegbar, um die Ausweichbewegung auszuführen.

Diese Bewegbarkeit bzw. dieser Freiheitsgrad der beweglichen Schutzeinrichtung kann über eine oder mehrere Linearführungen oder einen oder mehrere Schwenkhebel erreicht werden. Diese Linearführungen oder Schwenkhebel können dann beispielsweise an dem bereits erwähnten Träger angeordnet sein. Mittelbar über die Linearführungen bzw. Schwenkhebel ist dann die bewegliche Schutzeinrichtung an dem Träger angeordnet.

In vielen Fällen ist eine Linearführung, die eine Ausweichbewegung orthogonal zu der Einzugsrichtung der Einzugstelle ermöglicht, besonders vorteilhaft. Bei Einzugstellen, in denen die Gefahr besteht, dass die Hand eines Maschinenbedieners eingezogen wird, ist eine Ausweichbewegung von fünfundzwanzig Millimetern geeignet. Es ist jedoch auch möglich, kleinere oder größere Ausweichbewegungen konstruktiv vorzugeben und zu begrenzen, je nachdem wie die Einzugstelle ausgebildet ist und welche Körperteile (Hand, Fuß vom Einziehen in die Einzugstelle bedroht sind. Mit der Ausweichbewegung wird erreicht, dass das Körperteil nicht mehr gequetscht wird, d. h. es wirken keine Kräfte auf den eingezogenen Körperteil, die zu Verletzungen führen können.

In der Praxis hat es sich oft vorteilhaft erwiesen, wenn ein Spalt zwischen der festen trennenden Schutzeinrichtung und dem Produkt während des Normalbetriebs größer ist als in den einschlägigen Vorschriften vorgeschrieben wird. Um einerseits dem praktischen Erfordernis eines möglichst großen Spalts und andererseits den gesetzlichen Vorschriften zu entsprechen, ist in weiterer vorteilhafter Ausgestaltung die feste trennende Schutzeinrichtung in einer Führung geführt, wobei eine geführte Bewegung der festen trennenden Schutzeinrichtung eine zu der Einzugrichtung der Einzugstelle orthogonale Richtungskomponente aufweist. Die geführte Bewegung verkleinert den Spalt zwischen der festen trennenden Schutzeinrichtung und einem Produkt (z.B. eine Wellpappe). Dies bedeutet, dass immer dann, wenn die Gefahr besteht, dass die Hand eines Maschinenbedieners in die Einzugstelle eingezogen wird, die feste trennende Schutzeinrichtung in der Führung in Richtung auf das Produkt bewegt wird, so dass sich der Spalt verkleinert und die gesetzlich vorgeschriebenen Grenzwerte unterschreitet. Dieser Vorgang muss selbstverständlich so rasch erfolgen, dass der Spalt den vorgeschriebenen Maximalwert unterschreitet, bevor die Hand eines Maschinenbedieners die feste trennende Schutzeinrichtung erreichen kann.

Damit der Spalt zwischen der festen trennenden Schutzeinrichtung und dem Produkt im Gefahrenfall schneller verkleinert wird, ist mit der beweglichen Schutzeinrichtung ein Manipulator verbunden, der die feste trennende Schutzeinrichtung formschlüssig in einer Betriebsposition hält, wenn sich die bewegliche Schutzeinrichtung in einer Normalposition befindet. Mit "Betriebsposition der festen trennenden Schutzeinrichtung" ist gemeint, dass der Spalt zwischen der festen trennenden Schutzeinrichtung und dem Produkt gegebenenfalls größer ist als in den einschlägigen Vorschriften gestattet.

Sobald jedoch die bewegliche Schutzeinrichtung die Ausweichposition verlässt, wird der Formschluss zwischen dem Manipulator und der festen trennenden Schutzeinrichtung aufgehoben, so dass sich die feste trennende Schutzeinrichtung in ihrer Führung auf das Produkt zu bewegen kann und dadurch die Breite des Spalts verkleinert wird.

Damit auch in der Betriebsposition der Spalt nicht größer als gewollt wird, weist die Führung einen Endanschlag auf, der die maximale Breite des Spalts begrenzt.

In weiterer vorteilhafter Ausgestaltung ist vorgesehen, dass eine von der Feder auf die feste trennende Schutzeinrichtung ausgeübte (Feder-)Kraft so auf die feste trennende Schutzeinrichtung wirkt, dass sie den Spalt verkleinert. Anders ausgedrückt: Sobald die bewegliche Schutzeinrichtung die Normalposition verlassen hat, wird der Formschluss zwischen dem Manipulator und der festen trennenden Schutzeinrichtung aufgehoben und die Federkraft bewegt die feste trennende Schutzeinrichtung schnell und mit ausreichend großer Kraft in Richtung des Produkts, so dass die Breite des Spalts zwischen fester trennender Schutzeinrichtung und dem in die Einzugstelle geförderten Produkt rasch verkleinert wird und insbesondere so klein wird, dass die einschlägigen Vorschriften eingehalten werden.

In weiterer vorteilhafter Ausgestaltung löst die bewegliche Schutzeinrichtung einen Nothalt eines Antriebs der Einzugstelle aus, sobald die bewegliche Schutzeinrichtung eine Ausweichbewegung beginnt. Dies ist sehr einfach möglich durch einen elektrischen Schalter oder Taster, der betätigt wird, wenn sich die bewegliche Schutzeinrichtung von ihrer Normalposition entfernt und eine Ausgleichsbewegung beginnt. So kann zum Beispiel ein Schalter geöffnet werden, wenn die bewegliche Schutzeinrichtung mit der Ausweichbewegung beginnt. Dieses Signal wird an die Steuerung der Maschine übermittelt und führt dazu, dass die Steuerung einen Nothalt des Antriebs auslöst. Dann kann die Einzugstelle zum Stillstand gebracht werden, bevor die Hand eines Maschinenbedieners an die Einzugstelle bzw. die feste trennende Schutzeinrichtung gelangt.

Damit ist eine weitere redundante Sicherung gewährleistet.

Eine weitere vorteilhafte Ausgestaltung der Erfindung sieht vor, dass die bewegliche Schutzeinrichtung so lang ist, dass ein Nothalt, der durch die erfindungsgemäße Sicherungsvorrichtung ausgelöst wird, zum Stillstand der Einzugstelle führt, bevor die Hand in die Einzugstelle gelangt. Damit ist ein zusätzlicher Schutz vor Verletzungen der Hand des Maschinenbedieners gegeben.

Die der Erfindung zugrundeliegende Aufgabe wird auch durch die Verfahren gemäß Anspruch 19 gelöst. Dieses Verfahren weist die im Zusammenhang mit den Vorrichtungsansprüchen erläuterten Vorteile auf, so dass, um Wiederholungen zu vermeiden, auf diese verwiesen wird.

Schutzeinrichtung eine Ausweichbewegung ausführt. Alternativ

Kurz gesagt: Durch den Einsatz der erfindungsgemäßen Sicherungsvorrichtung und des erfindungsgemäßen Verfahrens ist es möglich, die Arbeitssicherheit von potentiell unfallträchtigen Einzugstellen deutlich zu verbessern, die Arbeit an den Maschinen und Anlagen mit den Einzugstellen zu vereinfachen und mit einer sehr hohen Sicherheit die bleibende Verletzung von der Hand eines Maschinenbedieners, oder noch gravierendere Folgen eines Einzugs, zu vermeiden.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

Es zeigen:
- Figur 1: eine isometrische Ansicht eines Ausführungsbeispiels einer erfindungsgemäßen Sicherungsvorrichtung;
- Figur 2: eine Seitenansicht des Ausführungsbeispiels gemäß Figur 1 im Normalbetrieb;
- Figur 3: eine Seitenansicht des Ausführungsbeispiels gemäß Figur 1 während einer Ausweichbewegung; und
- Figur 4: ein Längsschnitt durch das Ausführungsbeispiel gemäß Figur 1;
- Figur 5: eine Seitenansicht eines weiteren Ausführungsbeispiels einer erfindungsgemäßen Sicherungsvorrichtung in der Normal-Position;
- Figur 6: eine Seitenansicht des weiteren Ausführungsbeispiels in der Ausweich-Position und
- Figur 7: der positionsabhängige Verlauf der Haltekraft F_{H}.

### Beschreibung der Ausführungsbeispiele

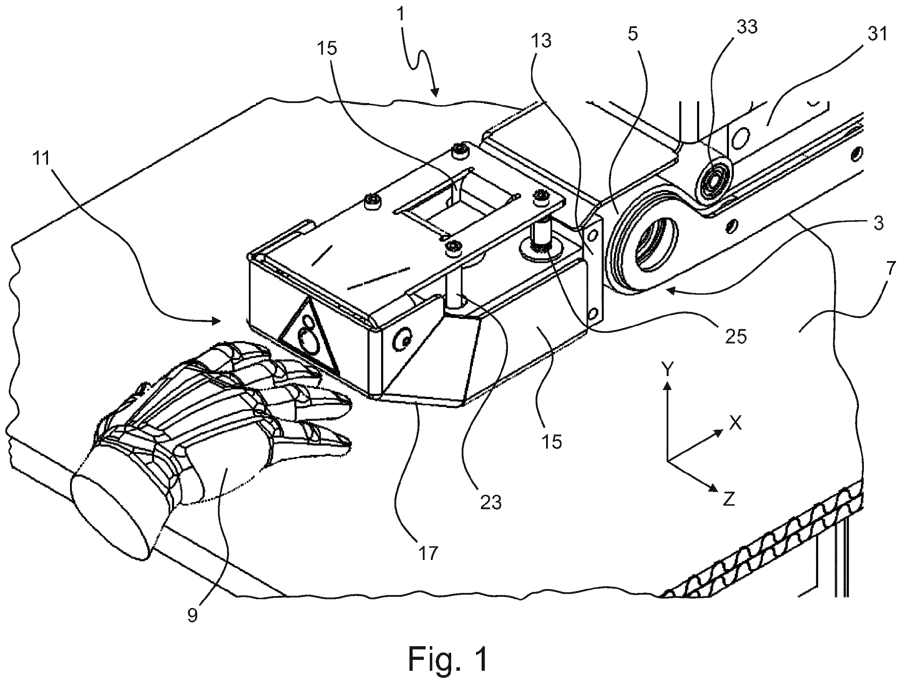

In der Figur 1 ist ein Ausführungsbeispiel einer erfindungsgemäßen Sicherungsvorrichtung 1 dargestellt. Die Sicherungsvorrichtung 1 ist einer Einzugstelle 3 vorgelagert. Die Einzugstelle 3 wird bei diesem Ausführungsbeispiel durch zwei angetriebene Flachriemen 5 oder eine Wellpappe 7 und den oberen in Figur 1 sichtbaren Flachriemen 5 gebildet. Die Flachriemen transportieren eine Wellpappe 7. Daher ist der unterhalb der Wellpappe 7 angeordnete Flachriemen nicht sichtbar. Die Bewegungsrichtung des Flachriemens 5 ist durch einen Pfeil angedeutet. Sie führt dazu, dass die Wellpappe 7 in Richtung der positiven x-Achse transportiert wird.

Der sich verjüngende Spalt zwischen den Flachriemen 5, bzw. einem Flachriemen 5 und der Wellpappe 7 ist die eigentliche Einzugstelle. Wenn keine Wellpappe 7 transportiert wird, dann bilden die beiden Flachriemen 5 die Einzugstelle 3.

Wenn die Hand 9 eines Maschinenbedieners in diese Einzugstelle 3 gelangt, wird zumindest die Hand massiv verletzt. Die DIN EN 1010-1:2011-06 schreibt für solche Einzugstellen, aber auch Einzugstellen, die durch zwei rundlaufende Zylinder gebildet werden, eine feste trennende Schutzeinrichtung vor. Bei der erfindungsgemäßen Vorrichtung ist diese feste trennende Schutzeinrichtung als Metallplatte ausgebildet. Sie hat in den Figuren das Bezugszeichen 13.

Erfindungsgemäß ist nun vorgesehen, vor der festen trennenden Schutzeinrichtung 13 eine bewegliche Schutzeinrichtung 15 anzuordnen, die eine Ausweichbewegung (hier in Richtung der Y-Achse) ausführt, wenn die Hand 9 des Maschinenbedieners über die Einführschräge 17 der beweglichen Schutzeinrichtung 15 in den Spalt zwischen der Sicherungsvorrichtung 1 bzw. der beweglichen Schutzeinrichtung 15 und der Wellpappe 7 gezogen wird. Sowohl die feste trennende Schutzeinrichtung 13 als auch die bewegliche Schutzeinrichtung 15 sind an einem Träger 31 angeordnet, der die Rollen 33 trägt, über welche der in den Figuren obere Flachriemen 5 geführt wird. Nicht alle Rollen 33 sind sichtbar, da einige der Rollen von Schutzabdeckungen verdeckt sind. Die Rollen 33 und der Flachriemen 5 sind bei diesem Ausführungsbeispiel der einstellbare Teil der Einzugstelle 3.

Um den Transport von Wellpappen 7 unterschiedlicher Dicke (z. B. einlagige, zweilagige oder dreilagige Wellpappe) zu ermöglich, ist der Träger 31 in der Höhe einstellbar. D. h., wenn zum Beispiel dicke dreilagige Wellpappe verarbeitet wird, dann wird der Träger 31 etwas in Richtung der Y-Achse angehoben und in dieser Position fixiert. Wenn dünne Wellpappe verarbeitet wird, dann wird der Träger 31 etwas in Richtung der negativen Y-Achse abgesenkt und in dieser Position fixiert.

Diese Bewegungen des Trägers 31 machen die feste trennende Schutzeinrichtung 13 und die bewegliche Schutzeinrichtung 15 mit, weil sie an dem Träger 31 angeordnet sind. Das hat den Vorteil, dass die beiden Schutzeinrichtungen 13, 15 ohne weiteres Zutun bei allen auftretenden Dicken von Werkstücken uneingeschränkt funktionsfähig bleiben. Dadurch werden Fehleinstellungen durch den Maschinenbediener oder Manipulationen vermieden und die Akzeptanz der Sicherungsvorrichtung erhöht.

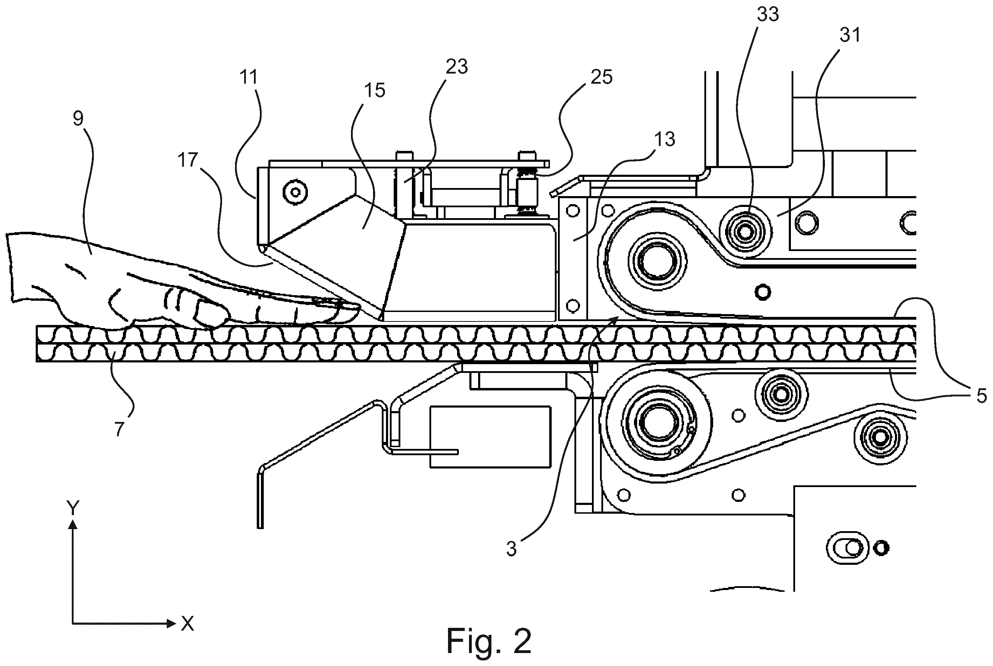

Die bewegliche Schutzeinrichtung 15 wird in der in den Figuren 1 und 2 dargestellten Normal-Position mit einer einstellbaren (Halte-)Kraft gehalten.

Die Haltekraft ist so gewählt, dass die Wellpappe 7 mit Hilfe der Einführschräge 17 gut in den Spalt eingeführt werden kann, ohne dass es zu einer Ausweichbewegung der beweglichen Schutzeinrichtung 15 kommt. Andererseits muss unbedingt gewährleistet sein, dass die bewegliche Schutzeinrichtung 15 ihre Ausweichbewegung in Richtung der Y-Achse beginnt, wenn die Hand 9 in den Spalt zwischen der Einführschräge 17 und der Wellpappe 7 gezogen wird.

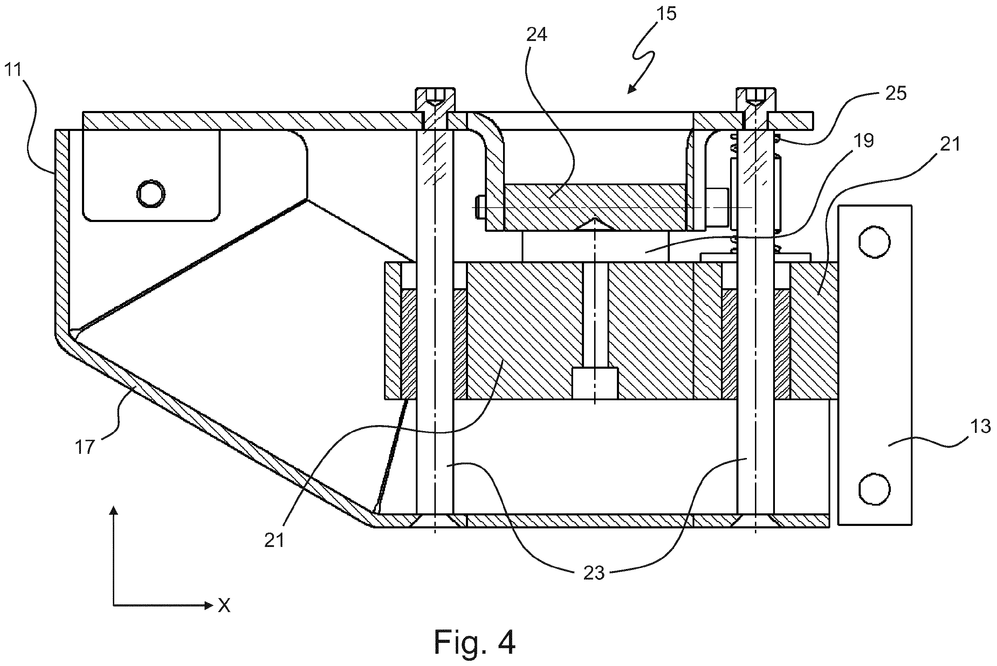

Eine besonders vorteilhafte konstruktive Ausgestaltung sieht vor, dass die bewegliche Schutzeinrichtung 15 mit Hilfe von einem oder mehreren Permanent- oder Elektromagneten (siehe Figur 4) in der Normal-Position gehalten wird. Durch die Zahl und Abmessungen der Magnete kann die Haltekraft konstruktiv auf den gewünschten Wert eingestellt werden.

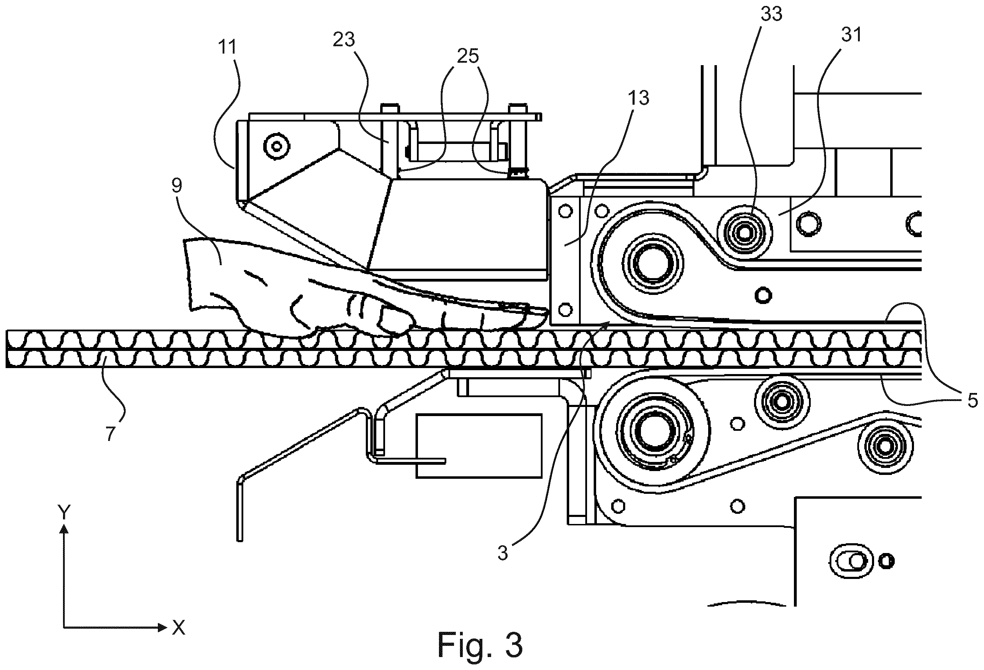

Wenn die Hand zwischen die bewegliche Schutzeinrichtung 15 und die Wellpappe 7 gezogen wird, dann wird die Haltekraft der Magnete überwunden und die bewegliche Schutzeinrichtung 15 weicht in Richtung der Y-Achse um etwa zwanzig Millimeter aus. Sobald der direkte Kontakt zwischen dem Magnet und einer an der beweglichen Schutzeinrichtung 15 angeordneten Ankerplatte (siehe Figur 4) unterbrochen ist, sinkt die Haltekraft sehr stark ab. Die beweglichen Schutzeinrichtung 15 wird dann von optionalen Federn 35 in die Ausweich-Position gemäß Figur 3 bewegt.

Wenn die bewegliche Schutzeinrichtung 15 die Ausweich-Position einnimmt, wird die Hand 9 nicht mehr eingezogen und der Maschinenbediener kann seine Hand sehr einfach aus dem auf beispielsweise 30 mm vergrößerten Spalt zwischen der beweglichen Schutzeinrichtung 15 und der Wellpappe 7 herausziehen. In der Ausweich-Position wirkt keine oder höchstens eine sehr kleine Querkraft auf die Hand 9 des Maschinenbedieners.

Wenn das dem Maschinenbediener nicht gelingen sollte, dann ist die Hand 9 des Maschinenbedieners trotzdem nicht gefährdet, wie sich aus der Figur 3 ergibt. In der Figur 3 ist gut zu erkennen, dass die bewegliche Schutzeinrichtung 15 nach oben, d.h. in Richtung der y-Achse, ausgewichen ist (Ausweich-Position), so dass eine Quetschung oder ein Pressen der Hand 9 nicht erfolgt. Die Hand 9 wird von der festen trennenden Schutzeinrichtung 13 zurückgehalten, so dass die Hand 9 nicht in die Einzugstelle 3 gezogen wird.

In der Figur 2 ist die Situation gemäß Figur 1 in einer Seitenansicht dargestellt. In dieser Darstellung befindet sich die Hand 9 in dem Spalt zwischen der Einführschräge 17 und der Wellpappe 7. Allerdings ist die Hand 9 noch nicht so weit in diesen Spalt eingedrungen, dass sie die bewegliche Schutzeinrichtung 15 nach oben bewegt. Die bewegliche Schutzeinrichtung 15 befindet sich in der Normal-Position. In diesem Zustand arbeitet die Anlage ganz normal.

Erst wenn die Hand 9 weiter in Richtung der Einzugstelle 3 bewegt wird oder sich bewegt, löst die bewegliche Schutzeinrichtung 15 aus und macht eine Ausweichbewegung in Richtung der positiven y-Achse. Dadurch wird die Kraft, mit der die Hand 9 an die Wellpappe 7 gedrückt wird, auf null reduziert. In Folge dessen kann der Maschinenbediener seine Hand 9 ohne Weiteres auch gegen die Einzugsrichtung der Wellpappe 7 aus dem vergrößerten Spalt (sieh Figur 3) ziehen.

Dazu ist es vorteilhaft, wenn, wie in der Figur 4 dargestellt, die bewegliche Schutzeinrichtung 15 durch Magnete in der Normalstellung gehalten wird. Erst nach dem Überschreiten einer konstruktiv vorgegebenen Haltekraft, bricht die Haltekraft zusammen und die bewegliche Schutzeinrichtung 15 wird, beispielsweise federunterstützt, in die Ausweichposition gemäß der Figur 3 geführt.

In der Figur 4 ist eine konstruktive Lösung dargestellt bei der die Haltekraft in der Normalposition durch einen Magnet 19, bevorzugt einen Permanentmagnet, aufgebracht wird.

Über Linearführungen 23 ist die bewegbare Schutzeinrichtung 15 relativ zu der Halterung 21 und zu der festen trennenden Schutzeinrichtung 13 in Richtung der Y-Achse bewegbar, so dass sie die Ausweichbewegung in Richtung der Y-Achse ausführen kann.

Der Magnet 19 ist an einer Halterung 21 angebracht. Der Magnet 19 und die feste trennende Schutzeinrichtung 13 verändern ihre relative Lage zueinander nicht. An der beweglichen Schutzeinrichtung 15 ist eine Ankerplatte 24 befestigt.

In der Figur 4 ist die bewegliche Schutzeinrichtung 15 in der Normalposition dargestellt. In dieser Position liegt die Ankerplatte 24 an dem Magnet 19 an und hält die bewegliche Schutzeinrichtung 15 in der Normalposition mit der durch die zwischen Magnet 19 und Ankerplatte 24 vorgegebenen Haltekraft.

Zwischen der Halterung und der beweglichen Schutzeinrichtung 15 ist eine (Druck-)Feder 25 angeordnet. Sie ist vorgespannt, wobei die Federkraft in der Normalposition deutlich kleiner ist als die Magnetkräfte zwischen Magnet 19 und Ankerplatte 24.

Sobald die bewegliche Schutzeinrichtung 15 die Normalposition verlässt, haben der Magnet 19 und die Ankerplatte 24 keinen Kontakt mehr und die Haltekraft nimmt so stark ab, dass die Federkraft der Druckfeder 25 die bewegliche Schutzeinrichtung 15 (in Figur 4 nach oben) drückt, bis die Unterseite der beweglichen Schutzeinrichtung 15 an der Unterseite der Halterung 21 anliegt (Ausweich-Position).

Die von der oder den optionalen Federn 35 auf die bewegliche Schutzeinrichtung 15 ausgeübte Kraft ist entgegengesetzt gerichtet zu der von den Magneten 19 auf die bewegliche Schutzeinrichtung 15 ausgeübten Haltekraft.

Die Haltekraft ist positionsabhängig. Sie hat ein positives Maximum, wenn sich die bewegliche Schutzeinrichtung 15 in der Normal-Position befindet und nimmt stark ab, sobald die bewegliche Schutzeinrichtung 15 die Normal-Position verlassen hat.

Bei dem oben geschilderten Ausführungsbeispiel wird die Haltekraft negativ, sobald die von der oder den optionalen Federn 35 auf die bewegliche Schutzeinrichtung 15 ausgeübte Kraft größer ist als ist die von den Magneten 19 auf die bewegliche Schutzeinrichtung 15 ausgeübte Kraft. Das bedeutet, dass die bewegliche Schutzeinrichtung 15 zwei bistabile Positionen "kennt", nämlich die Normal-Position und Ausweich-Position.

Anstelle des in Figur 4 dargestellten Ausführungsbeispiels mit einem Magnet und einer vorgespannten Druckfeder 25, ist es auch möglich, beispielsweise mit Hilfe eines Kniehebels oder anderer Schwenkmechanismen, die positionsabhängige Haltekraft zu realisieren und zu gewährleisten, dass im Normalbetrieb die Position der beweglichen Schutzeinrichtung 15 unverändert bleibt, bis eine konstruktiv vorgegebene Haltekraft überschritten wird. Danach bewegt sich die bewegliche Schutzeinrichtung 15 in die Ausweich-Position (siehe Figur 3).

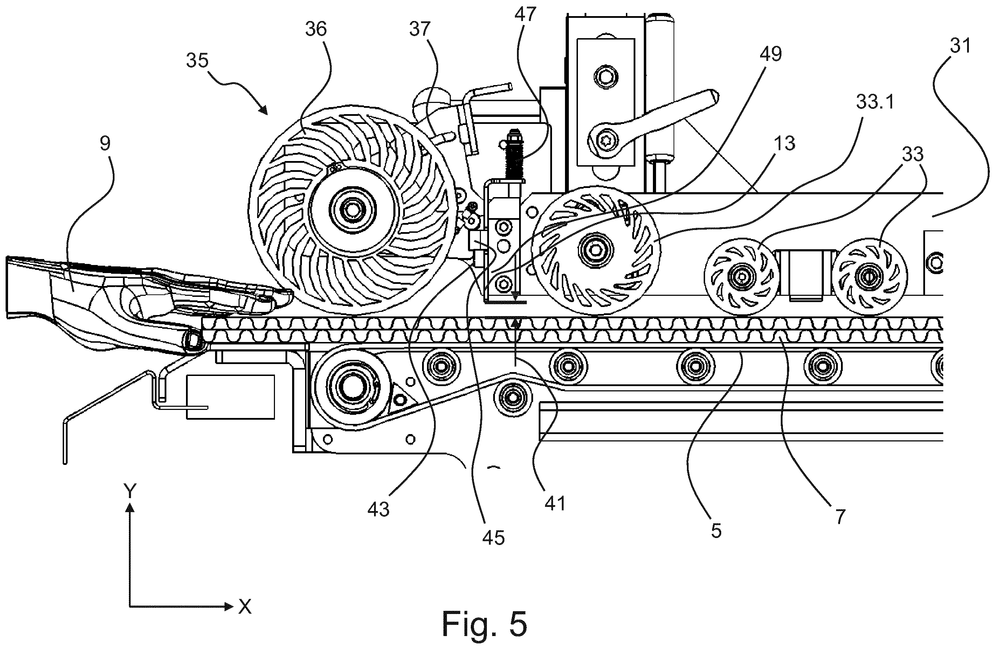

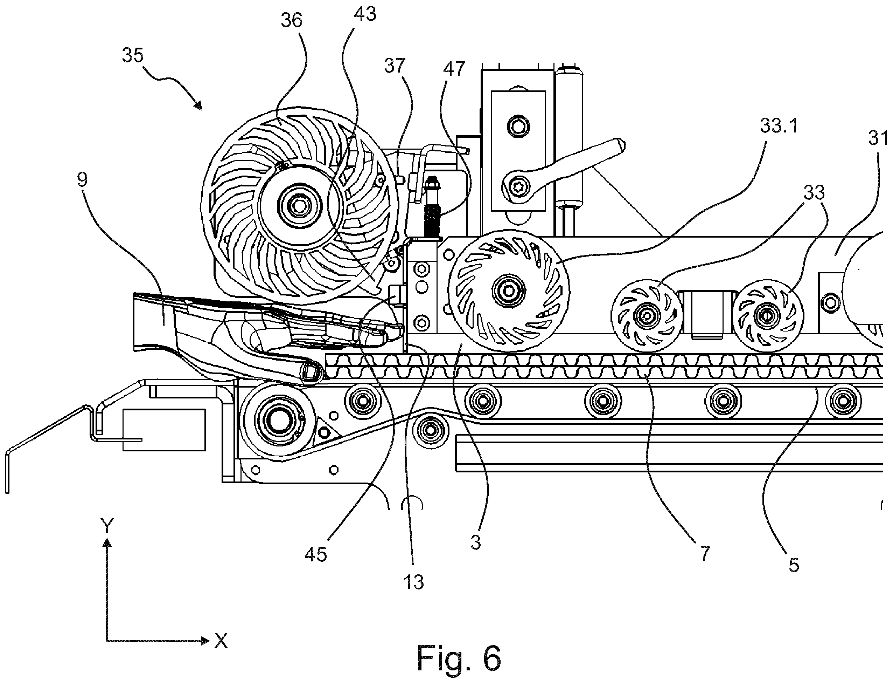

In den Figuren 5 und 6 ist ein weiteres Ausführungsbeispiel einer erfindungsgemäßen Sicherungsvorrichtung 1 dargestellt. Viele Merkmale sind ähnlich oder sogar gleich wie beim ersten Ausführungsbeispiel. Daher werden für gleiche Bauteile die gleichen Bezugszeichen verwandt und nur die Unterschiede erläutert.

Die Einzugstelle 3 wird bei diesem Ausführungsbeispiel durch eine Rolle 33.1 und die Wellpappe 7 gebildet. Wenn keine Wellpappe 7 vorhanden ist, dann wird die Einzugstelle 3 durch die Rolle 33.1 und den unteren Riemen 5 gebildet. Ein oberer Flachriemen ist bei diesem Ausführungsbeispiel nicht vorhanden. Die Rolle 33.1 ist, wie die anderen Rollen 33, an dem höhenverstellbaren Träger 31 drehbar gelagert.

Die Anpresskraft zwischen den Rollen 33 und dem unterhalb der Wellpappe 7 befindlichen angetriebenen Flachriemen 5 ermöglicht den Transport der Wellpappe 7 in Richtung der positiven X-Achse.

Der sich verjüngende Spalt zwischen der Rolle 33.1 und der Wellpappe 7 ist die Einzugstelle 3. Wenn keine Wellpappe 7 transportiert wird, dann bilden die Rolle 33.1 und der Flachriemen 5 die Einzugstelle 3.

Die bewegliche Schutzeinrichtung 15 ist bei diesem Ausführungsbeispiel eine (nicht angetriebene) Rolle 35, die eine Schwenk- oder Ausgleichsbewegung mit einer Komponente in Y-Richtung -Achse ausführt, wenn die Hand 9 des Maschinenbedieners zwischen die Rolle 35 und die Wellpappe 7 gerät. Die Rolle 35 ist an einem Schwenkhebel 37 drehbar gelagert. Der Schwenkhebel 37 ist an dem Träger 31 schwenkbar befestigt. Das zugehörige Lager ist mit 39 bezeichnet; es ist der Drehpunkt/der Momentanpol des Schwenkhebels 37

Die Rolle 35 kann so gestaltet sein, dass sie in radialer Richtung etwas nachgiebig ist. Das wird bei dem dargestellten Ausführungsbeispiel durch gekrümmte Speichen 36 zwischen einem Außendurchmesser der Rolle 35 und deren Nabe erreicht. Wenn die Anpresskraft der Rolle 35 hoch ist und die Hand 9 unter die Rolle gerät, dann verringert die radiale Nachgiebigkeit der Rolle 35 die Flächenpressung zwischen Hand 9 und Rolle 35. Dadurch werden Quetschungen der Hand vermieden.

In der Figur 5 ist die Rolle 35 in der Normalposition und in der Figur 6 in der Ausweichposition dargestellt. Der Verlauf der Haltekraft kann entsprechend dem ersten Ausführungsbeispiel ortsabhängig sein, mit einem Maximum in der Normalposition und einem Minimum in der Ausweichposition.

In den Figuren 5 und 6 ist eine feste trennende Schutzeinrichtung 13 dargestellt, die, auch wenn es zunächst paradox anmutet, in einer Führung 49 geführt ist. Die Führung 49 ermöglicht es, die feste trennende Schutzeinrichtung 13 in einer Richtung, die orthogonal zu der Einzugsrichtung verläuft, zu verschieben. Die Einzugsrichtung entspricht in den Figuren 5 und 6 der X-Richtung, während die Führung 49 eine Verschiebbarkeit der festen trennenden Schutzeinrichtung in Richtung der Y-Achse ermöglicht. In der Figur 5 hat die feste trennende Schutzeinrichtung 13 die Betriebsposition. Betriebsposition meint, dass ein Spalt 41 zwischen der Unterkante der festen trennenden Schutzeinrichtung 13 und der Wellpappe 7 z.B. zehn Millimeter oder zwölf Millimeter groß ist. Dieser Spalt ist größer als von den einschlägigen Vorschriften akzeptierten Spaltbreiten für feste trennende Schutzeinrichtungen. Allerdings erleichtert ein solch breiter Spalt den Betrieb ungemein.

Die feste trennende Schutzeinrichtung 13 wird über einen Formschluss zwischen der beweglichen Schutzeinrichtung 35 und der festen trennenden Schutzeinrichtung 13 in der Betriebsposition gehalten.

In dem dargestellten Ausführungsbeispiel ist es so, dass an dem Schwenkhebel 37 ein Manipulator 43 angeordnet ist. An der festen trennenden Schutzeinrichtung 13 ist ein Vorsprung 45 angeordnet. Diese beiden Bauteile 43 und 45 ergeben einen Formschluss, solange die bewegliche Schutzeinrichtung 35 sich in der Normalposition befindet. In dieser Betriebsposition hat der Spalt 41, wie bereits erwähnt, ein größeres Maß als zulässig. Sobald die bewegliche Schutzeinrichtung 35 die Normalposition verlässt, wird der Formschluss zwischen der beweglichen Schutzeinrichtung 35 und der festen trennenden Schutzeinrichtung 13 aufgehoben. Diese Situation ist in der Figur 6 dargestellt. Man kann gut erkennen, dass der Manipulator 13 sich nicht mehr unter dem Vorsprung 45 befindet, so dass der Formschluss aufgehoben ist und die Feder 47 die feste trennende Schutzeinrichtung in Richtung der negativen Y-Achse (nach unten in der Figur 6) auf die Wellpappe zu bewegen kann. Dies geschieht innerhalb von Sekundenbruchteilen und hat zur Folge, dass der Spalt 41 zwischen der festen trennenden Schutzeinrichtung 13 und der Wellpappe auf null zurückgeht oder eine sehr kleine Breite von beispielsweise nur noch einem Millimeter hat. Im Idealfall liegt die feste trennende Schutzeinrichtung auf der Wellpappe 7 auf, so dass überhaupt kein Spalt mehr vorhanden ist. Damit wird zuverlässig verhindert, dass die Hand 9 des Maschinenbedieners in die Einzugstelle 3 gezogen wird. Durch diese Verkleinerung des Spalts werden alle Vorschriften bezüglich der Breite des Spalts 41 eingehalten.

In der Figur 5 ist die feste trennende Schutzeinrichtung 13 so positioniert, dass sich ein Spalt 41 von zum Beispiel 10 mm Breite einstellt. Ein so breiter Spalt 41 erfüllt die gesetzlichen Vorgaben an eine feste trennende Schutzeinrichtung nicht; er hat in dieser Position keine Sicherheitsfunktion.

In manchen Anwendungen muss der Spalt 41 während des Betriebs größer sein als es die gesetzlichen Vorgaben fordern; letztere fordern zum Beispiel eine Spaltbreite von maximal 6mm.

Das kann der Fall sein, wenn der Anpressdruck der Rolle 35 relativ groß ist und die Wellpappe 7 relativ nachgiebig ist. Dann drückt die Rolle 35 die Wellpappe 7 etwas zusammen (z. B. um 5 mmm in Richtung der negativen Y-Achse) und in Folge dessen wird der Spalt 41 größer. Der Anpressdruck wird dadurch erhöht, dass die Rolle 35 vom Maschinenbediener in (nicht dargestellten) Langlöchern etwas in Richtung der negativen Y-Achse verschoben und in dieser Position arretiert wird.

Dadurch wird die Wellpappe 7 etwas zusammengedrückt und in Folge dessen wird der Spalt 41 größer.

Wenn der Anpressdruck der Rolle 35 relativ klein ist, dann drückt die Rolle 35 die Wellpappe 7 deutlich weniger zusammen (z. B. um 1 mmm in Richtung der negativen Y-Achse). Dann bleibt der Spalt 41 klein.

Die Breite des Spalts 41 variiert je nach Anpressdruck zum Beispiel zwischen 10 mm (kaum Anpressdruck) und ca. 5 mm (sehr starker Anpressdruck). Der Anpressdruck der Rolle 35 muss manchmal vom Maschinenbediener geändert werden, ohne dass der Träger 31 und mit ihm die feste trennende Schutzeinrichtung 31 in der Höhe verändert werden.

Wäre der Spalt 41 von vorneherein auf einen Wert kleiner als 6 mm eingestellt, dann kann das dazu führen, dass bei geringem Anpressdruck der Rolle 35 nur ein Spalt 41 von 1 mm Breite vorhanden ist. Nur wenn der Anpressdruck sehr hoch ist, stellt sich ein Spalt 41 von etwa 6 mm Breite ein. Eine Spaltbreite von nur 1 mm ist zu klein, weil die Wellpappe 7 nicht immer ganz eben ist, sondern oftmals etwas nach gekrümmt ist. Dann stößt die Vorderkante der Wellpappe 7 gegen die feststehende Trenneinrichtung 13, sie erreicht die Rolle 33.1 nicht und in Folge dessen ist der Transport der Wellpappe 7 gestört.

Auch der Anpressdruck der Rolle 33.1 hat einen Einfluss auf die Breite des Spalts 41. Wenn der Anpressdruck der Rolle 33. relativ groß ist, dann drückt die Rolle 33.1 die Wellpappe 7 etwas zusammen und in Folge dessen wird der Spalt 41 größer.

Wenn der Anpressdruck der Rolle 33.1 relativ klein ist, dann drückt die Rolle 33.1 die Wellpappe 7 deutlich weniger zusammen. Dann bleibt der Spalt 41 klein.

Die Einstellbarkeit des Anpressdrucks sowohl der Rolle 35 als auch der Rollen 33 sind wichtige Parameter mit deren Hilfe der Maschinenbediener einen störungsfreien Transport der Wellpappe einstellen kann.

Die feste trennende Schutzeinrichtung 13 ist an dem Träger 31 montiert. Die Höhe des Trägers 31 über dem Transportband 5 stellt der Maschinenbediener unter anderem in Abhängigkeit der Dicke der Wellpappe 7 ein. Ist die Wellpappe 7 dick, wird der Träger 31 und mit ihm die feste trennende Schutzeinrichtung 13 vom Maschinenbediener in eine etwas höhere Position gebracht und dort fixiert. Ist die Wellpappe 7 dünn, wird der Träger 31 und mit ihm die feste trennende Schutzeinrichtung 13 etwas abgesenkt und dort fixiert. Weil auch die feste trennende Schutzeinrichtung 13 an dem Träger 31 montiert ist, hängt die Breite des Spalts 41 zunächst nicht der Dicke der Wellpappe 7 ab.

Um das oben erläuterte durch die verschiedenen Anpressdrücke der Rollen 35 und 33 verursachte Problem der wechselnden Spaltbreiten und die in den einschlägigen Vorschriften geforderte maximale Breite des Spalts 41 in Einklang zu bringen, ist bei diesem Ausführungsbeispiel die feststehende Trenneinrichtung 13 verschiebbar geführt.

In der Figur 6 befindet sich die Rolle 35 und mit ihr der Schwenkhebel 37 in der Ausweichposition und die feste trennende Schutzeinrichtung 13 liegt auf der Oberseite der Wellpappe 7 auf. Das heißt, sie hat sich in Richtung der negativen Y-Achse (nach unten in der Figur 6) bewegt. Ein Spalt zwischen der festen trennenden Schutzeinrichtung 13 ist nicht mehr vorhanden.

Der Schwenkhebel 37 umfasst einen Manipulator 43 (siehe Figur 6) angebracht, die in Normalposition von Rolle 35 und Schwenkhebel 37 unter einem Vorsprung 45 der festen trennenden Schutzeinrichtung 13 formschlüssig eingreift.

Der Manipulator 43 ist in der Regel an dem Schwenkhebel 37 festgeschraubt oder auf andere Weise befestigt.

Durch die Ausweichbewegung der Rolle 35 und des Schwenkhebels 37, wird die Manipulator 43 unter dem Vorsprung 45 herausgezogen und der Formschluss aufgehoben.

Die feste trennende Schutzeinrichtung 13 ist in einer Linearführung am Träger 31 derart geführt, dass sie in Richtung der Wellpappe 7 ausgehend von der in Figur 5 dargestellten Position in Richtung der Wellpappe 7 gleitet, sobald der Formschluss zwischen der Manipulator 43 und dem Vorsprung 45 aufgehoben ist.

Um den Spalt 41 rasch zu schließen, ist eine optionale Feder 47 vorgesehen, welche eine in Richtung der negativen Y-Achse gerichtete Federkraft auf die feste trennende Schutzeinrichtung 13 ausübt. Sie unterstützt und beschleunigt das Schließen des Spalts 41 maßgeblich. Damit werden die in den einschlägigen Normen und Vorschriften geforderten maximalen Spaltmasse deutlich unterschritten. Wenn die feste trennende Schutzeinrichtung 13, wie in Figur 6 dargestellt, auf der Wellpappe 7 aufliegt, dann ist die Breite des Spalts 41 gleich 0. Wenn die Wellpappe 7 durch die Rollen 35 und 33 stark zusammengedrückt wird, dann ist die Breite des Spalts 41 in jedem Fall kleiner als in den einschlägigen Vorschriften gefordert. De Breite kann zum Beispiel 4 oder 5 mm betragen.

Diese erfindungsgemäße Ausführung einer festen Trenneinrichtung 13 kann auch zusammen mit dem ersten Ausführungsbeispiel einer beweglichen Schutzeinrichtung 15 gemäß der Figuren 1 bis 3 eingesetzt werden. Dann weist die bewegliche Schutzeinrichtung 15 einen Manipulator 43 auf, der mit dem Vorsprung 45 in der oben beschriebenen Weise zusammenwirkt.

Durch eine geeignete Abstimmung der Baulänge der beweglichen Schutzeinrichtung 15 auf die Einzugsgeschwindigkeit der Einzugstelle kann außerdem, gewährleistet werden, dass die Flachriemen 5 oder die angetriebene Rolle 33.1 durch einen Nothalt gestoppt werden, bevor die Hand 9 die Einzugstelle erreicht.

Der Nothalt wird bei der erfindungsgemäßen Sicherungsvorrichtung dadurch ausgelöst, dass die Hand 9 in den sich verjüngenden Spalt zwischen Einführschräge 17 und Wellpappe 7 gelangt und die zum Auslösen der beweglichen Schutzeinrichtung 15 erforderliche Haltekraft überschritten wird.

Dazu werden folgende Annahmen getroffen: Zu Beginn der Ausweichbewegung der beweglichen Schutzeinrichtung 15 wird ein Sensor, ein Schalter oder ein Taster betätigt. Dessen Ausgangssignal wird in einer Steuerung verarbeitet und ein Steuersignal "Nothalt" ausgegeben. Von der Signalerzeugung bis zum Stillstand des Flachriemens vergehen etwa 0,5 s. Selbstverständlich sind diese Zeiten abhängig von den zum Einsatz kommenden Komponenten und der Software der Steuerung.

Wenn man eine Einzugsgeschwindigkeit von 1,2 m/s annimmt, dann bewegt sich die Wellpappe 7 in der oben genannten Zeitspanne von 0,5 s um etwa 60 cm in Richtung der Einzugstelle. Das heißt in diesem Beispiel: Wenn der Abstand zwischen der Vorderkante der erfindungsgemäßen Sicherungsvorrichtung und der Einzugstelle größer als 60 cm ist, erreicht die Hand 9 die Einzugstelle nicht, sondern bleibt zuvor zusammen mit der Wellpappe 7 stehen, weil die Flachriemen 5 aufgrund des Nothalts zum Stillstand gebracht wurden. Anders ausgedrückt: Selbst, wenn die feste trennende Schutzeinrichtung 13 nicht vorhanden wäre, ist eine Verletzung der Hand 9 ausgeschlossen.

In der Figur 7 ist der positionsabhängige Verlauf der auf die bewegliche Schutzeinrichtung 13 wirkenden Haltekraft F_{H} zwischen der Normalposition (Y = 0) und der Ausweichposition (Y = Y₁) schematisch dargestellt.

Dadurch ergibt sich dank der Erfindung ein "Quantensprung" bei der Verbesserung der Arbeitssicherheit.

### Bezugszeichenliste

1 Vorrichtung zur Sicherung (Sicherungsvorrichtung)
Einzugsrichtung (X-Achse)
Ausweichrichtung (Y-Achse)
3 Einzugstelle
5 Flachriemen
7 Wellpappe
9 Hand eines Maschinenbedieners
11 Vorderes Ende
13 feste trennende Schutzeinrichtung
15 bewegliche Schutzeinrichtung
17 Einführschräge
19 Magnet
21 Halterung
23 Linearführung
24 Ankerplatte
25 Feder
31 Träger
33 Rolle
35 Rolle
37 Schwenkhebel
39 Lager
41 Spalt
43 Manipulator
45 Vorsprung
47 (Schließ-)Feder

## Patentansprüche

1. Vorrichtung zur Sicherung einer Einzugstelle (3) umfassend eine feste trennende Schutzeinrichtung (13), wobei sie zusätzlich eine bewegliche Schutzeinrichtung (15, 35) aufweist, und dass eine Ausweichbewegung der beweglichen Schutzeinrichtung (15) eine Richtungskomponente (Y) aufweist, die orthogonal zu einer Einzugsrichtung (X) der Einzugstelle (3) gerichtet ist, wobei die bewegliche Schutzeinrichtung (15, 35) - in Einzugsrichtung gesehen - vor der festen trennenden Schutzeinrichtung (13) angeordnet ist, **dadurch gekennzeichnet, dass** die bewegliche Schutzeinrichtung (15) eine oder mehrere Linearführungen (23) umfasst, oder dass die bewegliche Schutzeinrichtung (15) mindestens einen oder mehrere Schwenkhebel (37) umfasst, der entgegen der Richtung der Ausweichbewegung mit einer definierten Haltekraft in einer Normal-Position gehalten wird, wobei die Haltekraft des Schwenkhebels (37) positionsabhängig ist, und wobei die Haltekraft des Schwenkhebels (37) maximal ist, wenn er sich in der Normal-Position befindet.

2. Vorrichtung nach Anspruch 1 oder 2, **dadurch gekennzeichnet, dass** die bewegliche Schutzeinrichtung (15, 35) und/oder die feste trennende Schutzeinrichtung (13) an einem Träger (31) angeordnet ist.

3. Vorrichtung nach Anspruch 1, **dadurch gekennzeichnet, dass** die Haltekraft der beweglichen Schutzeinrichtung (15, 35) einstellbar ist.

4. Vorrichtung nach Anspruch 1, **dadurch gekennzeichnet, dass** die Haltekraft der beweglichen Schutzeinrichtung (15, 35) negativ ist, wenn sie sich in der Ausweich-Position befindet.

5. Vorrichtung nach einem der vorhergehenden Ansprüche, **dadurch gekennzeichnet, dass** die bewegliche Schutzeinrichtung (15) an einem vorderen Ende (11), das der festen trennenden Schutzeinrichtung (13) gegenüberliegt, eine Einführschräge (17) aufweist.

6. Vorrichtung nach einem der vorhergehenden Ansprüche, **dadurch gekennzeichnet, dass** die bewegliche Schutzeinrichtung eine drehbar gelagerte Rolle (35) umfasst.

7. Vorrichtung nach einem der vorhergehenden Ansprüche, **dadurch gekennzeichnet, dass** die bewegliche Schutzeinrichtung (15) relativ zu der festen trennenden Schutzeinrichtung (13) bewegbar ist, um die Ausweichbewegung auszuführen.

8. Vorrichtung nach einem der vorhergehenden Ansprüche, **dadurch gekennzeichnet, dass** die feste trennende Schutzeinrichtung (13) in einer Führung geführt ist, dass eine geführte Bewegung der festen trennenden Schutzeinrichtung (13) eine zu einer Einzugsrichtung (X) der Einzugstelle (3) orthogonale Richtungskomponente (Y) aufweist, und dass die geführte Bewegung einen Spalt (41) zwischen der festen trennenden Schutzeinrichtung (13) und einem Werkstück verkleinert.

9. Vorrichtung nach einem der vorhergehenden Ansprüche , **dadurch gekennzeichnet, dass** ein mit der beweglichen Schutzeinrichtung (15) verbundener Manipulator (43) die feste trennende Schutzeinrichtung (13) formschlüssig in einer Betriebsposition hält, wenn sich die bewegliche Schutzeinrichtung (15, 35) in einer Normal-Position befindet.

10. Vorrichtung nach einem der vorhergehenden Ansprüche, **dadurch gekennzeichnet, dass** die bewegliche Schutzeinrichtung (15, 35) den Formschluss zwischen Manipulator (43) und fester trennender Schutzeinrichtung (13) aufhebt, wenn sich die bewegliche Schutzeinrichtung (15) in einer Ausweichposition befindet.

11. Vorrichtung nach einem der vorhergehenden Ansprüche, **dadurch gekennzeichnet, dass** die Führung einen Endanschlag aufweist, dass der Endanschlag eine maximale Breite des Spalts (41) begrenzt.

12. Vorrichtung nach einem der vorhergehenden Ansprüche, **dadurch gekennzeichnet, dass** eine von einer Feder (47) auf die feste trennende Schutzeinrichtung (13) ausgeübte Federkraft so auf die feste trennende Schutzeinrichtung (13) wirkt, dass sie den Spalt (41) verkleinert.

13. Sicherungsvorrichtung nach einem der vorhergehenden: Ansprüche, **dadurch gekennzeichnet, dass** die bewegliche Schutzeinrichtung (15, 35) einen Antrieb der Einzugstelle (3) abschaltet, sobald die bewegliche Schutzeinrichtung (15) die Normal-Position verlässt und eine Ausweichbewegung beginnt.

14. Sicherungsvorrichtung nach einem der vorhergehenden Ansprüche, **dadurch gekennzeichnet, dass** eine Länge (L) der beweglichen Schutzeinrichtung (15, 35) in der Einzugsrichtung (X-Achse) so groß ist, dass die Zeitspanne (T_{Stop}), die zwischen dem Auslösen der beweglichen Schutzeinrichtung und einem Nothalt der Einzugstelle (3) vergeht, kleiner ist als die Zeitspanne (T_{Einzug}), die zwischen dem Beginn des Einzugs eines Körperteils in die bewegliche Schutzeinrichtung (15) bzw. (35) und dem Erreichen der Einzugstelle (3) vergeht. (T_{Stop} < T_{Einzug})

15. Verfahren zur Sicherung einer Einzugstelle (3), wobei an der Einzugstelle (3) eine Sicherungsvorrichtung (1) nach einem oder mehreren der vorhergehenden Ansprüche angeordnet ist, **dadurch gekennzeichnet, dass** die bewegliche Schutzeinrichtung (15) einen Nothalt des Antriebs der Einzugstelle (3) auslöst, sobald die bewegliche Schutzeinrichtung (15) eine Normal-Position verlassen hat,und dass ein Spalt (41) zwischen der festen trennenden Schutzeinrichtung (13) und dem in die Einzugstelle (3) geförderten Produkt verkleinert wird, sobald die bewegliche Schutzeinrichtung (15) die Normalposition verlässt.

## Claims

1. Device for making an intake point (3) safe, the device comprising a fixed separating guard (13), the device additionally having a movable guard (15, 35), and an evasive movement of the movable guard (15) having a directional component (Y) which is directed orthogonally to an intake direction (X) of the intake point (3), the movable guard (15, 35) being arranged in front of the fixed separating guard (13) when viewed in the intake direction, **characterized in that** the movable guard (15) comprises one or more linear guides (23), or **in that** the movable guard (15) comprises at least one or more pivot levers (37) which are held against the direction of the evasive movement by a defined holding force in a normal position, the holding force of the pivot lever (37) being position-dependent, and the holding force of the pivot lever (37) being at its maximum when the pivot lever is in the normal position.

2. Device according to claim 1 or claim 2, **characterized in that** the movable guard (15, 35) and/or the fixed separating guard (13) is arranged on a support (31).

3. Device according to claim 1, **characterized in that** the holding force of the movable guard (15, 35) is adjustable.

4. Device according to claim 1, **characterized in that** the holding force of the movable guard (15, 35) is negative when the guard is in the evasive position.

5. Device according to any of the preceding claims, **characterized in that** the movable guard (15) has an insertion ramp (17) at a front end (11) opposite the fixed separating guard (13).

6. Device according to any of the preceding claims, **characterized in that** the movable guard comprises a rotatably mounted roller (35).

7. Device according to any of the preceding claims, **characterized in that** the movable guard (15) is movable relative to the fixed separating guard (13) in order to perform the evasive movement.

8. Device according to any of the preceding claims, **characterized in that** the fixed separating guard (13) is guided in a guide, **in that** a guided movement of the fixed separating guard (13) has a directional component (Y) which is orthogonal to an intake direction (X) of the intake point (3), and **in that** the guided movement reduces a gap (41) between the fixed separating guard (13) and a workpiece.

9. Device according to any of the preceding claims, **characterized in that** a manipulator (43) connected to the movable guard (15) holds the fixed separating guard (13) form-fittingly in an operating position when the movable guard (15, 35) is in a normal position.

10. Device according to any of the preceding claims, **characterized in that** the movable guard (15, 35) releases the form fit between the manipulator (43) and the fixed separating guard (13) when the movable guard (15) is in an evasive position.

11. Device according to any of the preceding claims, **characterized in that** the guide has an end stop, **in that** the end stop limits a maximum width of the gap (41).

12. Device according to any of the preceding claims, **characterized in that** a spring force exerted by a spring (47) on the fixed separating guard (13) acts on the fixed separating guard (13) in such a way that it reduces the gap (41).

13. Safety device according to any of the preceding claims, **characterized in that** the movable guard (15, 35) switches off a drive of the intake point (3) as soon as the movable guard (15) leaves the normal position and begins an evasive movement.

14. Safety device according to any of the preceding claims, **characterized in that** a length (L) of the movable guard (15, 35) in the intake direction (x-axis) is so great that the time interval (T_{Stop}) which elapses between triggering the movable guard and an emergency stop of the intake point (3) is less than the time interval (T_{Einzug}) which elapses between the beginning of the intake of a body part into the movable guard (15) or (35) and the intake point (3) being reached. (T_{Stop} < T_{Einzug})

15. Method for making an intake point (3) safe, a safety device (1) according to one or more of the preceding claims being arranged at the intake point (3), **characterized in that** the movable guard (15) triggers an emergency stop of the drive of the intake point (3) as soon as the movable guard (15) has left a normal position, and **in that** a gap (41) between the fixed separating guard (13) and the product conveyed into the intake point (3) is reduced as soon as the movable guard (15) leaves the normal position.

## Revendications

1. Dispositif de sécurisation d'un point d'entrée (3) comprenant un système de protection séparateur fixe (13) et un système de protection mobile (15, 35) dont un mouvement d'évitement du système de protection mobile (15) présente une composante directionnelle (Y) qui est orthogonale à une direction d'entrée (X) du point d'entrée (3), dans lequel le système de protection mobile (15, 35) est disposé - vu dans la direction d'entrée - devant le système de protection séparateur fixe (13), **caractérisé en ce que** le système de protection mobile (15) comprend un ou plusieurs guidages linéaires (23), ou que le système de protection mobile (15) comprend au moins un ou plusieurs leviers pivotants (37), qui est maintenu dans une position normale avec une force de maintien définie à l'encontre de la direction du mouvement d'évitement, dans lequel la force de maintien du levier pivotant (37) dépend de la position, et dans lequel la force de maintien du levier pivotant (37) est maximale lorsqu'il se trouve dans la position normale.

2. Dispositif selon la revendication 1 ou 2, **caractérisé en ce que** le système de protection mobile (15, 35) et/ou le système de protection séparateur fixe (13) est disposé sur un support (31).

3. Dispositif selon la revendication 1, **caractérisé en ce que** la force de maintien du système de protection mobile (15, 35) est réglable.

4. Dispositif selon la revendication 1, **caractérisé en ce que** la force de maintien du système de protection mobile (15, 35) est négative lorsqu'il se trouve dans la position d'évitement.

5. Dispositif selon l'une quelconque des revendications précédentes, **caractérisé en ce que** le système de protection mobile (15) présente un chanfrein d'introduction (17) à une extrémité avant (11) qui est opposée au système de protection séparateur fixe (13).

6. Dispositif selon l'une quelconque des revendications précédentes, **caractérisé en ce que** le système de protection mobile comprend un galet (35) monté en rotation.

7. Dispositif selon l'une quelconque des revendications précédentes, **caractérisé en ce que** le système de protection mobile (15) peut se mouvoir par rapport au système de protection séparateur fixe (13) pour exécuter le mouvement d'évitement.

8. Dispositif selon l'une quelconque des revendications précédentes, **caractérisé en ce que** le système de protection séparateur fixe (13) est guidé dans un guidage, qu'un mouvement guidé du système de protection séparateur fixe (13) présente une composante directionnelle (Y) orthogonale par rapport à une direction d'entrée (X) du point d'entrée (3), et que le mouvement guidé réduit une fente (41) entre le système de protection séparateur fixe (13) et une pièce à usiner.

9. Dispositif selon l'une quelconque des revendications précédentes, **caractérisé en ce qu'**un manipulateur (43) relié au système de protection mobile (15) maintient le système de protection séparateur fixe (13) par liaison de forme dans une position de fonctionnement lorsque le système de protection mobile (15, 35) se trouve dans une position normale.

10. Dispositif selon l'une quelconque des revendications précédentes, **caractérisé en ce que** le système de protection mobile (15, 35) annule la liaison de formes entre le manipulateur (43) et le système de protection séparateur fixe (13) lorsque le système de protection mobile (15) se trouve dans une position d'évitement.

11. Dispositif selon l'une quelconque des revendications précédentes, **caractérisé en ce que** le guidage présente une butée de fin de course, que la butée de fin de course limite une largeur maximale de la fente (41).

12. Dispositif selon l'une quelconque des revendications précédentes, **caractérisé en ce qu'**une force de ressort exercée par un ressort (47) sur le système de protection séparateur fixe (13) agit sur le système de protection séparateur fixe (13) de sorte qu'elle réduise la fente (41).

13. Dispositif de sécurisation selon l'une quelconque des revendications précédentes, **caractérisé en ce que** le système de protection mobile (15, 35) désactive un entraînement du point d'entrée (3) dès que le système de protection mobile (15) quitte la position normale et qu'un mouvement d'évitement commence.

14. Dispositif de sécurisation selon l'une quelconque des revendications précédentes, **caractérisé en ce qu'**une longueur (L) du système de protection mobile (15, 35) dans la direction d'entrée (axe X) est si grande que la durée (T_{arrêt}), qui s'écoule entre le déclenchement du système de protection mobile et un arrêt d'urgence du point d'entrée (3), soit inférieure à la durée (T_{entrée}), qui s'écoule entre le début de l'entrée d'une partie du corps dans le système de protection mobile (15) ou (35) et l'atteinte du point d'entrée (3). (T_{arrêt} < T_{entrée})

15. Procédé de sécurisation d'un point d'entrée (3), dans lequel un dispositif de sécurisation (1) selon l'une ou plusieurs des revendications précédentes est disposé sur le point d'entrée (3), **caractérisé en ce que** le système de protection mobile (15) déclenche un arrêt d'urgence de l'entraînement du point d'entrée (3) dès que le système de protection mobile (15) a quitté une position normale, et qu'une fente (41) entre le système de protection fixe séparateur (13) et le produit transporté dans le point d'entrée (3) est réduite dès que le système de protection mobile (15) quitte sa position normale.
